# EUROPEAN PATENT SPECIFICATION

(11) **EP 3 381 679 B1**
(45) Date of publication and mention of the grant of the patent: **11.05.2022**
(21) Application number: 18164700.9
(22) Date of filing: 28.03.2018
(51) Int. Cl.: B32B 17/10, E04F 11/022, E04F 11/18, E06B 3/54

(54) **A STRUCTURAL ELEMENT OF A LAMINATED GLASS PLATE AND A METAL CONNECTING ELEMENT WITH AN ADHESIVE INTERLAYER CONNECTION IN BETWEEN**
STRUKTURELEMENT AUS EINER VERBUNDGLASPLATTE UND EINEM METALLVERBINDUNGSELEMENT MIT EINER DAZWISCHEN LIEGENDEN KLEBESCHICHTVERBINDUNG
ÉLÉMENT STRUCTURAL D'UNE PLAQUE DE VERRE FEUILLETÉ ET D'UN ÉLÉMENT DE RACCORDEMENT MÉTALLIQUE AVEC UNE CONNEXION INTERCALAIRE ADHÉSIF ENTRE EUX

(30) Priority: 30.03.2017 NL 2018609
(43) Date of publication of application: 03.10.2018
(73) Proprietor: ABT B.V., 6800 AB Arnhem (NL)
(72) Inventor: Hoogendoorn, Wouter, 2731BG BENTHUIZEN (NL); Haarhuis, Kars Johannes, 6515ZL Nijmegen (NL); Thiele, Alfred, 25884 VIÖL (DE)
(74) Representative: Verhees, Godefridus Josephus Maria

(56) References cited:
- WO-A1-2015/166397
- AT-U1- 11 925
- DE-A1- 4 006 709
- DE-A1-102006 027 074
- US-A1- 2004 006 939
- US-A1- 2015 093 539

## Description

### Technical filed of the invention

The invention relates to a structural element comprising:
- a laminated glass panel comprising:
   - at least two glass plates each having two opposed main surfaces and a number of side surfaces, at least one main surface of one of the glass plates is facing one of the main surfaces of the other glass plate,
   - an adhesive interlayer being present between said main surfaces facing each other and attaching the glass plates to each other, said adhesive interlayer being of a material suitable for application in a laminated glass panel,
- a metal connecting element attached to one of the side surfaces of the laminated glass panel by fixation means for connecting the laminated glass panel with another structural element, the part of the metal connecting element connected to the glass panel is flat and the part of the side surfaces of the laminated glass panel connected to the metal connecting element is flat and the fixation means for fixation of the metal connection element to the side surface of the laminated glass panel are formed solely by a further adhesive interlayer between the flat part of the side surface of the laminated glass panel and the flat part of the metal connecting element.

Fixation means include all fasteners such as bolt joints, glue joints, form-fitting joints or a combination of these joints. Said structural element can be any kind of element being of any size and of any material, for example concrete, glass, metal, wood.

### Background of the invention

A structural element according to the preamble of claim 1 is known from DE4006709A1. The metal connecting element of this known structural element has a L-shaped cross section and both legs of this L-shape are glued to the laminated glass panel.

Further, staircases with steps and handrails of laminated glass panels are known. The steps extending between the handrail panels. Metal connecting elements are connected to the side surfaces of the glass panels constituting the steps and facing the main surfaces of the handrails. The side surfaces of the laminated glass panels constituting the steps are provided with recesses in which protrusions on the metal connecting elements extend.

### Summary of the invention

It is an object of the present invention to provide a structural element of the type defined in the opening paragraph in which a strong fixation between the metal connection element and the side surface of the laminated glass panel is easier to realize than in the known structural element. To this end the structural element according to the invention is characterized in that the metal connection element is exclusively attached to the side surface of the laminated glass panel and the further adhesive interlayer like the said adhesive interlayer being one of the following interlayers: ionoplastic polymer (SentryGlas^{®}) film, poly vinyl butyral (PVB) film, ethylene vinyl acetate (EVA) film, thermoplastic polyurethane (TPU) film. Preferably also said adhesive interlayer being one of the above mentioned films. Thus the fixation means for the fixation of the metal connection element to the side surface of the laminated glass panel do not comprise any other fixation means like bolts and form-fitting connections. It appeared that the interlayer of laminated glass plates, especially safety glass plates, is a good adhesive for the attachment of the metal connecting element to the side surface of the glass panel and creates a strong connection between them.

In a preferred embodiment the structural element according to the invention is characterized in that the laminated glass panel is formed by or forms part of a handrail of a staircase or a floor slab in which the glass panel extending vertically and wherein a part of the underside of the glass panel constitutes said flat part of said side surface. The steps are constituted by a base element, for example to be formed of concrete or steel, to which the metal connecting elements are attached. The handrail elements add stiffness to the thin element, which element otherwise would provide too less stiffness or break under the applied loads.

Preferably, the metal connecting element comprises a metal strip of which a main side constitutes said flat part of the metal connecting element and the opposite main side is provided with connecting parts such as small notches for making (bolted) connections to other constructive elements such as concrete steps.

### Brief description of the drawings

The invention will be further elucidated below on the basis of drawings. These drawings show an embodiment of the structural element according to the present invention. In the drawings:
Figure 1 shows the structural element embodied as a handrail of a staircase;
Figure 2 is a detail of the staircase of Fig. 1 with the steps and handrail connected to each other;
Figure 3 is a detail of the staircase of Fig. 1 with the steps and handrail separated from each other; and
Figure 4 shows the connecting of the handrail and the steps in a cross section.

### Detailed description of the drawings

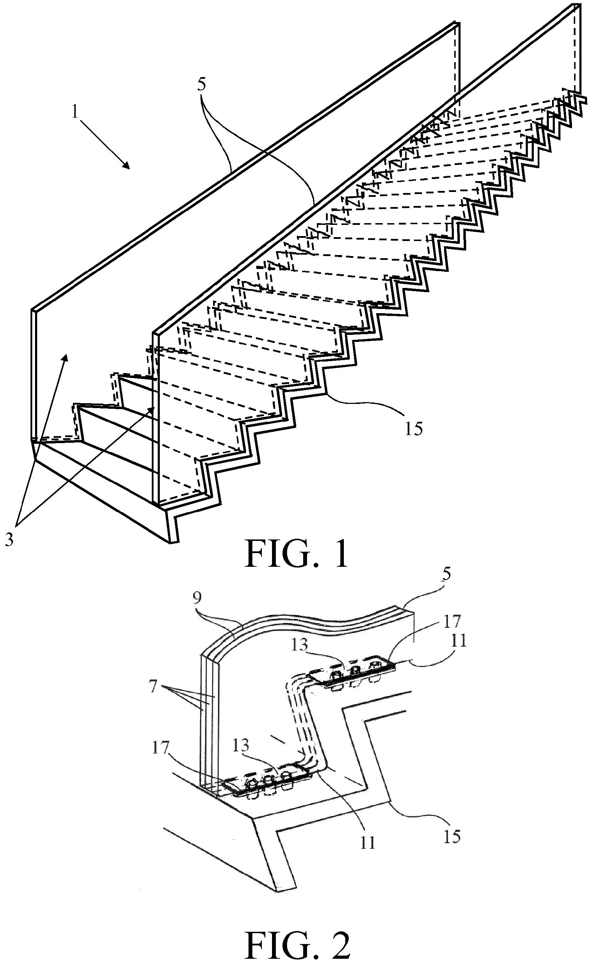

Figure 1 shows a staircase 1 of which the handrails 3 constitute embodiments of the structural element according to the invention. These handrails 3 are each made from a laminated glass panel 5 of two or more glass plates 7 attached to each other through two adhesive interlayers 9 being present between main surfaces of the glass plates facing each other, see the detail of the staircase shown in Figure 2.

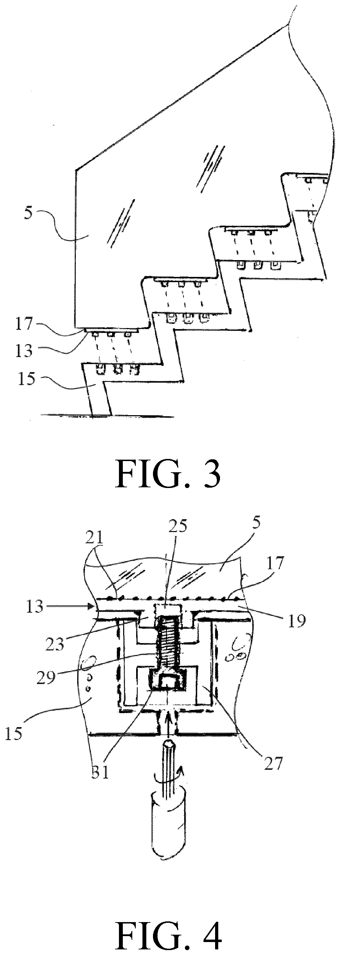

To flat parts of the undersides 11 of the laminated glass panels 5 flat parts of metal connecting elements 13 are attached for connecting the laminated glass panels 5 to a base structural element 15 that forms the steps of the staircase or a slab for a floor, roof, bridge, etc. Figure 3 shows a detail of the staircase with the steps 15 and handrail 3 separated to each other. The metal connection elements 13 are exclusively attached to the underside 11 of the laminated glass panels 5 by an adhesive interlayer 17. This interlayer 17 could be the same as the interlayers 9 between the glass plates 7 of the laminated glass panel 5. The adhesive interlayers are ionoplastic polymer (SentryGlas^{®}) films or PVB films or EVA films or thermoplastic polyurethane (TPU) films and are in common situations transparent.

Each metal connecting element 13 comprises a metal strip 19 of which a main side 21 constitutes said flat part of the metal connecting element that is attached to the laminated glass panel 5. The opposite main side of the metal strip could be provided with connecting parts 23 formed by notches provided with threaded holes 25, see Figure 4. Metal profiles 27 provided with through holes 29 are embedded in the concrete element 15. The metal connecting elements 13 are connected to the metal profiles 27 preferably by hidden bolts 31.

Although the present invention is elucidated above on the basis of the given drawings, it should be noted that this invention is not limited whatsoever to the embodiments shown in the drawings. The invention also extends to all embodiments deviating from the embodiments shown in the drawings within the context defined by the claims.

## Claims

1. A structural element (3) comprising:
- a laminated glass panel (5) comprising:
- at least two glass plates (7) each having two opposed main surfaces and a number of side surfaces, at least one of the main surfaces of one of the glass plates is facing one of the main surfaces of the other glass plate,
- an adhesive interlayer (9) being present between said main surfaces facing each other and attaching the glass plates to each other, said adhesive interlayer being of a material suitable for application in a laminated glass panel,
- a metal connecting element (13) attached to one of the side surfaces (11) of the laminated glass panel (5) by fixation means for connecting the laminated glass panel with another structural element (15),
the part of the metal connecting element (13) connected to the glass panel (5) is flat and the part of the side surfaces (11) of the laminated glass panel (5) connected to the metal connecting element (13) is flat and the fixation means for fixation of the metal connecting element (13) to the side surface (11) of the laminated glass panel (5) are formed solely by a further adhesive interlayer between the flat part of the side surface (11) of the laminated glass panel (5) and the flat part of the metal connecting element (13), **characterized in that** the metal connection element (13) is exclusively attached to the side surface (11) of the laminated glass panel (5) and the further adhesive interlayer (17) like the said adhesive interlayer (9) being one of the following interlayers: ionoplastic polymer film, poly vinyl butyral film, ethylene vinyl acetate film, thermoplastic polyurethane film.

2. A structural element (3) according to claim 1, **characterized in that** the further adhesive interlayer (17) is transparent.

3. A structural element (3) according to claim 1 or 2, **characterized in that** the laminated glass panel (5) is formed by or forms part of a handrail (3) of a staircase (1) or floor slab in which the glass panel extending vertically and wherein a part of the underside of the glass panel constitutes said flat part of said side surface (11).

4. A structural element (3) according to claim 3, **characterized in that** the metal connecting element (13) comprises a metal strip (19) of which a main side (21) constitutes said flat part of the metal connecting element and the opposite main side is provided with connecting parts (23).

## Patentansprüche

1. Konstruktionsteil (3), das Folgendes umfasst:
- eine Verbundglasplatte (5), die Folgendes umfasst:
- mindestens zwei Glasscheiben (7), die je zwei einander gegenüber angeordnete Hauptflächen sowie mehrere Seitenflächen besitzen, wobei mindestens eine der Hauptflächen einer der beiden Glasscheiben zu einer der Hauptflächen der anderen Glasscheibe zeigt,
- eine Klebstoffzwischenschicht (9), die sich zwischen den einander zugewandten Hauptflächen befindet und mittels derer die Glasscheiben aneinander befestigt sind, und die aus einem Material besteht, das für die Verwendung in einer Verbundglasplatte geeignet ist,
- ein Metall-Verbindungselement (13), das an einer Seitenfläche (11) der Verbundglasplatte (5) durch Befestigungsmittel angebracht ist, die der Verbindung der Verbundglasplatte mit einem anderen Konstruktionsteil (15) dienen,
wobei der mit der Glasplatte (5) verbundene Bereich des Metall-Verbindungselements (13) eben ist und der mit dem Metall-Verbindungselement (13) verbundene Bereich der Seitenfläche (11) der Verbundglasplatte (5) eben ist und die Befestigungsmittel für die Anbringung des Metall-Verbindungselements (13) an der Seitenfläche (11) der Verbundglasplatte (5) nur durch eine weitere Klebstoffverbindung zwischen dem ebenen Bereich der Seitenfläche (11) der Verbundglasplatte (5) und dem ebenen Bereich des Metall-Verbindungselements (13) gebildet werden, **dadurch gekennzeichnet, dass** das Metall-Verbindungselement (13) nur an der Seitenfläche (11) der Verbundglasplatte (5) befestigt ist und es sich bei der weiteren Klebstoffzwischenschicht (17) sowie der erwähnten Klebstoffzwischenschicht (9) um eine der folgenden Zwischenschichten handelt: Ionoplast-Folie, Polyvinylbutyralfolie, Ethylenvinylacetatfolie, thermoplastische Polyurethanfolie.

2. Konstruktionsteil (3) nach Anspruch 1, **dadurch gekennzeichnet, dass** die weitere Klebstoffzwischenschicht (17) transparent ist.

3. Konstruktionsteil (3) nach einem der Ansprüche 1 oder 2, **dadurch gekennzeichnet, dass** die Verbundglasplatte (5) durch das Geländer (3) einer Treppe (1) oder eine Bodenplatte gebildet wird oder davon einen Bestandteil bildet, wobei sich die Glasplatte in vertikaler Richtung erstreckt und ein Teil der Unterseite den erwähnten ebenen Bereich der erwähnten Seitenfläche (11) bildet.

4. Konstruktionsteil (3) nach Anspruch 3, **dadurch gekennzeichnet, dass** das Metall-Verbindungselement (13) eine Metallschiene (19) umfasst, deren eine Hauptseite (21) den erwähnten ebenen Bereich bildet und deren gegenüberliegende Hauptseite mit Verbindungsteilen (23) versehen ist.

## Revendications

1. Elément de construction (3) comprenant :
- un panneau de verre feuilleté (5) comprenant :
- au moins deux plaques de verre (7) ayant chacune deux surfaces principales opposées et un certain nombre de surfaces latérales, où au moins une des surfaces principales d'une des plaques de verre se trouve en face d'une des surfaces principales de l'autre plaque de verre,
- une couche intermédiaire adhésive (9) se trouvant entre les surfaces principales se faisant face et fixant les plaques de verre ensemble, laquelle couche intermédiaire adhésive est faite d'un matériau qui est approprié pour l'utilisation dans un panneau de verre feuilleté,
- un élément métallique de raccordement (13) fixé à une surface latérale (11) du panneau de verre feuilleté (5) par des moyens de fixation, pour pouvoir relier le panneau de verre feuilleté à un autre élément de construction (15),
où la partie de l'élément métallique de raccordement (13) étant reliée au panneau de verre (5) est plate et la partie de la surface latérale (11) du panneau de verre feuilleté (5) étant reliée à l'élément métallique de raccordement (13) est plate, et où les moyens de fixation pour fixer l'élément métallique de raccordement (13) à la surface latérale (11) du panneau de verre feuilleté (5) sont uniquement formés par une couche intermédiaire adhésive supplémentaire entre la partie plate de la surface latérale (11) du panneau de verre feuilleté (5) et la partie plate de l'élément métallique de raccordement (13), **caractérisé en ce que** l'élément métallique de raccordement (13) est exclusivement fixé à la surface latérale (11) du panneau de verre feuilleté (5) et **en ce que** la couche intermédiaire adhésive supplémentaire (17), de même que ladite couche intermédiaire adhésive (9), sont l'une des couches intermédiaires suivantes : film polymère ionoplastique, film de polybutyral de vinyle, film d'éthylène-acétate de vinyle, film de polyuréthane thermoplastique.

2. Elément de construction (3) selon la revendication 1, **caractérisé en ce que** la couche intermédiaire adhésive supplémentaire (17) est transparente.

3. Elément de construction (3) selon la revendication 1 ou 2, **caractérisé en ce que** le panneau de verre feuilleté (5) est formé par ou fait partie d'une rampe (3) d'un escalier (1) ou d'une planche de plancher dans laquelle le panneau de verre s'étend verticalement et dans laquelle une partie du dessous du panneau de verre constitue ladite partie plate de ladite surface latérale (11).

4. Elément de construction (3) selon la revendication 3, **caractérisé en ce que** l'élément métallique de raccordement (13) comprend une bande métallique (19) dont une surface principale (21) constitue ladite partie plate et dont la surface principale opposée est pourvue de pièces de raccordement (23).
